# FASCICULE DE BREVET EUROPEEN

(11) **EP 0 441 073 B1**
(45) Date de publication et mention de la délivrance du brevet: **04.05.1994**
(21) Numéro de dépôt: 90403518.5
(22) Date de dépôt: 11.12.1990
(51) Int. Cl.: B60J 10/04, B60R 13/04

(54) **Lécheur intérieur pour glace ou vitre d'automobile et son procédé de montage**
Lippe für Kraftfahrzeugfenster oder -scheibe und ihre Herstellungsvorrichtung
Lip for motor vehicle window or pane and its mounting method

(30) Priorité: 05.02.1990 FR 9001285
(43) Date de publication de la demande: 14.08.1991
(73) Titulaire: HUTCHINSON, F-75008 Paris (FR)
(72) Inventeur: Jonaczyk, Jean-Marc, F-45700 Villevoques (FR); Saint-Louis Augustin, Louis Guy, F-45200 Montargis (FR)
(74) Mandataire: Orès, Bernard

(56) Documents cités:
- DE-A- 3 126 491
- FR-A- 2 089 437
- PATENT ABSTRACTS OF JAPAN vol. 11, no. 16 (M--554) 16 janvier 1987;& JP-A-61 191449 (HONDA) 26 août 1986

## Description

L'invention a pour objet un lécheur intérieur de glace ou vitre d'automobile ainsi que son procédé de montage.

On sait que pour accroître le confort des passagers de l'habitacle d'un véhicule automobile, en particulier en ce qui concerne l'acoustique, on a déjà proposé le montage, sur une feuillure intérieure d'une baie de porte, d'un lécheur intérieur comportant une lèvre d'étanchéité munie d'un revêtement floqué propre à coopérer avec la glace ou vitre prévue pour obturer, partiellement ou totalement, ladite baie de porte. Un tel lécheur, en contact avec la garniture intérieure de la porte, contribue au maintien de la garniture et à l'aspect esthétique d'ensemble.

La fonction de maintien de la garniture est remplie dans les dispositifs connus par de petites lèvres ou pattes qui font saillie de la surface intérieure d'une gorge du corps du lécheur, prévue pour recevoir le bord supérieur, replié, de la garniture de porte, tandis que le flocage, prévu pour faciliter le glissement de la glace ou vitre, assure accessoirement en partie l'étanchéité sonore, en particulier en ce qui concerne le bruit en provenance de l'intérieur du caisson de porte. Cependant, de tels dispositifs connus ne sont pas entièrement satisfaisants car le frottement, notamment celui résultant des vibrations engendrées au cours du roulage, entre la glace ou vitre et le revêtement de la lèvre du lécheur d'une part, et d'autre part, entre le corps du lécheur et la garniture de porte, donne lieu à des bruits parasites en particulier à un phénomène de crissement généralement connu dans l'industrie automobile sous son nom anglais de "stick slip" et qui provient du contact entre le lécheur et la garniture.

Le problème se pose, par conséquent, de fournir un lécheur intérieur de glace ou vitre mobile d'automobile qui pallie les inconvénients des dispositifs connus.

C'est, à cet égard, un but général de l'invention de procurer un lécheur intérieur de réalisation simple et économique qui, tout en n'opposant pas de résistance notable au déplacement de la glace ou vitre avec laquelle il coopère assure une bonne isolation phonique aux bruits extérieurs ainsi qu'aux bruits intérieurs de la caisse et n'engendre lui-même aucun bruit parasite au contact de la garniture.

C'est, encore, un but de l'invention de fournir un tel lécheur qui n'engendre pas non plus de bruit parasite au contact de la glace ou vitre avec laquelle il coopère.

C'est, aussi, un but de l'invention de fournir un procédé de montage d'un lécheur intérieur pour glace ou vitre d'automobile qui permette de fortement réduire, voire supprimer, tout bruit parasite susceptible d'être engendré ou transmis au voisinage du lécheur.

Le problème est résolu, dans un lécheur intérieur suivant l'invention pour glace ou vitre mobile de porte d'automobile munie d'une garniture intérieure destinée à s'accrocher sur le lécheur par une gorge que présente ce dernier, par le fait que la surface intérieure de ladite gorge est munie, au moins sur sa partie avec laquelle est propre à coopérer une nervure d'accrochage de la garniture, d'une couche surfacique compatible acoustiquement avec la matière constituant ladite nervure, c'est-à-dire qui n'engendre pas de bruit de fréquence audible, notamment de bruit de crissement sous l'effet de contacts intermittents répétés à des fréquences comprises dans la gamme de fréquences vibratoires dûes au roulage, ladite couche étant une couche de vernis polyuréthanne présentant une bonne affinité aux colles de polyuréthanne ou une couche de produit du type polyoléfinique présentant de bonnes qualités de glissement et qui est de préférence coextrudée avec le ou les matériaux (élastomères ou produits analogues) constitutifs du corps du lécheur.

Suivant une autre caractéristique de l'invention, le lécheur comprend une lèvre d'étanchéité destinée à venir en contact avec la glace ou vitre mobile et ladite lèvre est garnie d'un revêtement polyoléfinique présentant de bonnes qualités de glissement.

Dans une mode d'exécution, ladite couche et ledit revêtement sont de même nature.

Dans un mode de mise en oeuvre de l'invention, la garniture intérieure de la porte est préalablement collée sur le lécheur muni d'une couche de vernis polyuréthanne et le lécheur est ensuite monté sur le véhicule simultanément avec la garniture.

Lorsque la garniture intérieure de porte comporte une couche de PVC grainé ou autre matière choisie pour son aspect esthétique solidaire d'une couche en polyuréthanne expansé, le lécheur est collé sur une partie de la surface de la couche en polyuréthanne.

D'autres caractéristiques et avantages de l'invention apparaîtront de la description qui suit, faite à titre d'exemple et en référence au dessin annexé dans lequel :
- la figure 1 est une vue très schématique d'une partie de véhicule automobile, notamment d'une portière propre à être munie d'un lécheur selon l'invention;
- la figure 2 est une vue schématique en coupe transversale illustrant la structure des dispositifs connus ;
la figure 3 est une vue schématique en coupe transversale du lécheur intérieur suivant l'invention ;
la figure 4 est une vue schématique en coupe transversale d'un premier mode d'exécution d'un lécheur suivant l'invention, tel que monté sur une automobile ;
la figure 5 est une vue schématique en coupe transversale d'un autre mode d'exécution du lécheur suivant l'invention, tel que monté sur une automobile ; et
la figure 6 est une vue à plus grande échelle d'une partie de la figure 5.

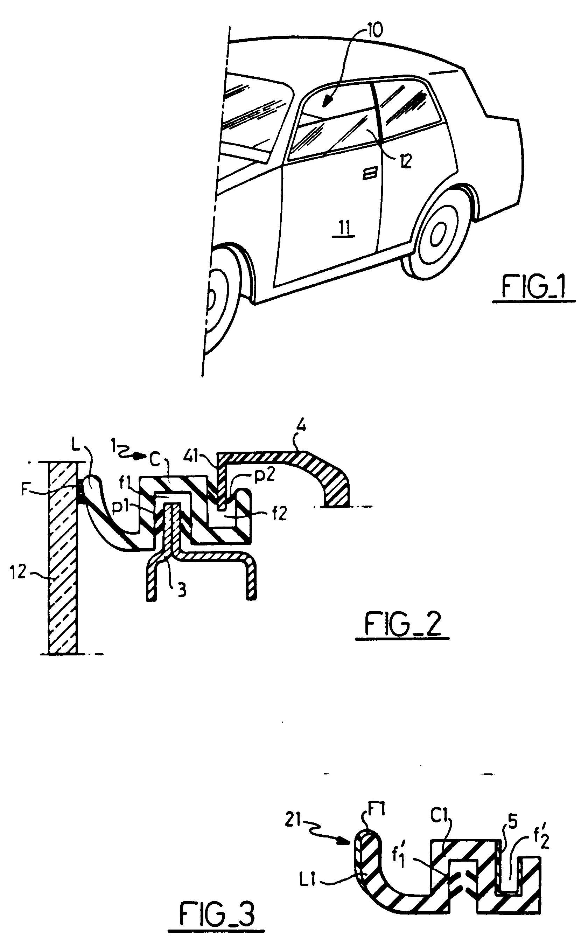

On se réfère d'abord à la figure 2 qui illustre l'état antérieur de la technique. Selon celui-ci, un lécheur intérieur désigné dans son ensemble par la référence 1 est constitué d'une lèvre L en caoutchouc naturel ou synthétique relativement souple, munie d'une couche F de poils ou floc sur sa partie destinée à venir en contact avec la glace ou vitre mobile 12, la lèvre L dépendant d'un corps C en caoutchouc naturel ou synthétique, plus dur que celui de la lèvre L et profilé de manière à présenter deux gorges d'orientation opposées, f1, f2 à section droite générale en forme de V ou de U et dont les parois en regard sont munies de petites pattes ou projections p1, p2 (dont seulement deux sont représentées sur la figure) souples et élastiques prévues pour l'accrochage ou la fixation du lécheur sur la feuillure intérieure 3 de la baie 10 ménagée dans la porte 11 du véhicule, d'une part, et pour le maintien du bord replié 41 de la partie supérieure de la garniture intérieure, 4, d'autre part. Avec un tel dispositif connu, les vibrations qui se produisent lors du roulage du véhicule au niveau du contact du lécheur avec la garniture 4, généralement en PVC grainé ou en polyuréthanne expansé (ou combinant ces deux matières) engendrent un bruit analogue à un crissement désagréable créant un inconfort important pour les passagers de l'habitacle, auquel s'ajoute le bruit résultant des vibrations dues au roulage et qui est engendré au niveau du contact entre la glace ou vitre mobile et le floc de la lèvre du lécheur.

Un lécheur intérieur suivant l'invention, 21, est illustré schématiquement sur la figure 3. Il est de forme générale semblable à celle des lécheurs intérieurs connus et peut donc être monté sans modification de la carrosserie sur les véhicules existants. Il comporte un corps C1, en un ou plusieurs matériaux du type élastomère, avantageusement réalisé par extrusion ou coextrusion et est conformé suivant deux gorges f'₁, f'₂ avec une lèvre d'étanchéité L₁ garnie d'une couche F₁ en un matériau à bonnes propriétés de glissement, avantageusement coextrudée avec le corps C₁. La gorge f'₁ comme la gorge f₁ est munie de pattes élastiques d'accrochage, mais la gorge f'₂, qui en est dépourvue, est munie d'une couche surfacique 5 compatible avec la matière dont est faite la garniture intérieure 4 de la porte 11.

Dans une première forme de réalisation, la couche surfacique 5 recouvre la totalité de la surface intérieure de la gorge f'₂, tandis que, dans une variante, elle recouvre seulement une partie de celle-ci, à savoir au moins le fond de la gorge et la surface latérale de la gorge avec laquelle est propre à venir en contact la garniture 4.

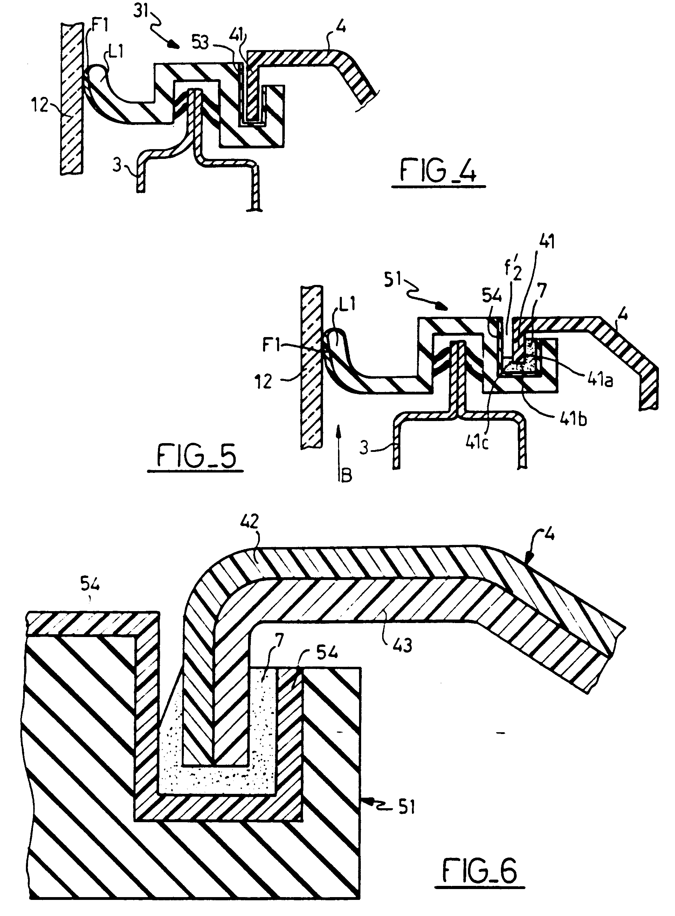

Dans le mode d'exécution du lécheur intérieur 31 illustré sur la figure 4, la couche surfacique compatible 53 est une couche de matière polyoléfinique déposée pour la simplicité de la fabrication sur la totalité de la surface intérieure de la gorge destinée à recevoir le bord replié 41 de la garniture intérieure 4, et est de préférence identique au revêtement F1.

Dans le mode d'exécution du lécheur 51 suivant l'invention illustré sur la figure 5, la couche surfacique compatible 54 est une couche de vernis polyuréthanne, déposée pour la simplicité de la fabrication sur la totalité de la surface intérieure de la gorge destinée à recevoir le bord replié 41 de la garniture intérieure 4, la facette 41a du bord replié 41, l'extrémité libre 41b de ce bord et une petite partie de la facette 41c de ce bord étant ensuite collées dans la gorge f'₂, par une couche de colle polyuréthanne, élastique, 7, dont l'épaisseur, faible, est grossie ici pour la lisibilité de la figure. Le lécheur 51 ainsi préalablement solidarisé à la garniture 4 est ensuite monté sur le véhicule avec ladite garniture en une seule opération.

Le détail de ce collage est visible sur la figure 6 qui illustre la solidarisation du lécheur intérieur 5 suivant l'invention avec une garniture 4 de porte résultant de l'accolement de deux couches ou feuilles de matériaux différents et, plus précisément dans la forme de réalisation décrite et représentée, une couche extérieure 42 donnant l'aspect esthétique d'ensemble, en PVC (polychlorure de vinyle) grainé solidaire d'une couche intérieure 43 en polyuréthanne expansé assurant une bonne insonorisation, donnant une certaine souplesse et qui se prête bien au collage sur le lécheur muni d'une couche de vernis polyuréthanne, le collage réalisant une véritable soudure entre la surface de la gorge f'₂ du lécheur et la couche de polyuréthanne de la garniture 4.

On constate alors, lors de la mise en oeuvre d'un lécheur selon l'invention, une atténuation considérable de l'effet "stick slip" simultanément à une forte réduction des bruits transmis par l'intérieur du caisson de porte suivant la direction de la flèche B.

La mise en oeuvre telle que définie ci-dessus est, en outre, très facile à exécuter, avec pour conséquence une réduction supplémentaire des opérations de montage et donc du coût de celui-ci.

## Revendications

1. Lécheur intérieur pour glace ou vitre mobile de porte d'automobile munie d'une garniture intérieure destinée à s'accrocher sur le lécheur par une gorge que présente ce dernier, caractérisé en ce que la surface intérieure de ladite gorge (f'₂) est munie, au moins sur sa partie avec laquelle est propre à coopérer une nervure (41) d'accrochage de la garniture (4), d'une couche surfacique (54) de vernis polyuréthanne présentant une bonne affinité aux colles de polyuréthanne compatible acoustiquement avec la matière constituant ladite nervure (41), c'est-à-dire qui n'engendre pas de bruit de fréquence audible, notamment de bruit de crissement sous l'effet de contacts intermittents répétés à des fréquences comprises dans la gamme de fréquences vibratoires dûes au roulage.

2. Lécheur intérieur pour glace ou vitre mobile d'une porte d'automobile munie d'une garniture intérieure destinée à s'accrocher sur le lécheur par une gorge que présente ce dernier, caractérisé en ce que la surface intérieure de ladite gorge (f'₂) est munie au moins sur la partie avec laquelle est propre à coopérer une nervure (41) d'accrochage de la garniture (4) d'une couche surfacique de produit du type polyoléfinique (53) présentant de bonnes qualités de glissement, compatible acoustiquement avec la matière constituant ladite nervure (41) c'est-à-dire qui n' engendre pas de bruit de fréquence audible, notamment de bruit de crissement sous l'effet de contacts intermittents répétés à des fréquences comprises dans la gamme de fréquences vibratoires dûes au roulage.

3. Lécheur suivant l'une des revendications précédentes, caractérisé en ce que sa lèvre d'étanchéité (L₁) est munie, au moins sur sa partie destinée à venir en contact avec la vitre (12), d'un revêtement polyoléfinique (F1) présentant de bonnes qualités de glissement.

4. Lécheur suivant les revendications 2 et 3, caractérisé en ce que ladite couche (53) et ledit revêtement (F1) sont de même nature.

5. Procédé de montage sur une baie (10) de porte (11) de véhicule automobile d'un lécheur (41) suivant la revendication 1, caractérisé en ce que la garniture (4) de la porte (11) est préalablement collée sur le lécheur (51) et en ce que celui-ci est ensuite monté sur le véhicule simultanément avec la garniture (4).

6. Procédé suivant la revendication 5, caractérisé en ce que la garniture (4) de porte (11) comportant une couche (42) de PVC grainé ou autre matière choisie pour son aspect esthétique solidaire d'une couche en polyuréthanne expansé (43), le lécheur (51) est collé au moins sur une partie de la surface de la couche en polyuréthanne expansé (43).

7. Procédé suivant la revendication 5, caractérisé en ce que la colle utilisée est une colle du type polyuréthanne.

## Patentansprüche

1. Innerer Abstreifer für eine bewegliche Fenster- oder Glasscheibe einer Kraftfahrzeugtür, die mit einem Innenbeschlag versehen ist, der dazu bestimmt ist, sich mit dem Abstreifer mittels einer Einkehlung, die dieser letztgenannte aufweist, zu verhaken, dadurch **gekennzeichnet**, daß die Innenoberfläche der genannten Einkehlung (f'₂) mindestens an ihrem Abschnitt, mit dem sie geeignet ist, mit einer Verhakungsrippe (41) des Beschlags (4) zusammenzuwirken, mit einer Oberflächenschicht (54) aus Polyurethan-Lack versehen ist, der eine gute Affinität zu den Polyurethan-Klebern aufweist, die akustisch mit dem Material kompatibel sind, das die genannte Rippe (41) bildet, d.h. der kein Geräusch mit hörbarer Frequenz, insbesondere ein Quietschgeräusch, unter der Wirkung der intermittierenden, wiederholten Berührungen bei Frequenzen erzeugt, die im Bereich der Schwingungsfrequenzen liegen, die auf die Fahrt zurückzuführen sind.

2. Innerer Abstreifer für die bewegliche Fenster- oder Glasscheibe einer Kraftfahrzeugtür, die mit einem Innenbeschlag versehen ist, der dazu bestimmt ist, sich mit dem Abstreifer mittels einer Einkehlung zu verhaken, die dieser letztgenannte aufweist, dadurch **gekennzeichnet**, daß die Innenoberfläche der genannten Einkehlung (f'₂) mindestens auf ihrem Abschnitt, mit dem sie geeignet ist, mit einer Verhakungsrippe(41) des Beschlags (4) zusammenzuwirken, mit einer Oberflächenbeschichtung aus einem polyolefinartigen Erzeugnis (53) versehen ist, das gute Gleiteigenschaften liefert und akustisch mit dem Material kompatibel ist, das die genannte Rippe (41) bildet, d.h. kein Geräusch in einer hörbaren Frequenz erzeugt, insbesondere kein Quietschgeräusch unter der Wirkung der intermittierenden, wiederholten Berührungen mit Frequenzen, die im Bereich der Schwingungsfrequenzen liegen, die auf die Fahrt zurückzuführen sind.

3. Abstreifer nach einem der vorangehenden Ansprüche, dadurch **gekennzeichnet**, daß seine Dichtlippe (L₁) mindestens auf ihrem Abschnitt, der dazu bestimmt ist, in Berührung mit der Glasscheibe (12) zu gelangen, mit einer Polyolefin-Verkleidung (F1) versehen ist, die gute Gleiteigenschaften liefert.

4. Abstreifer nach den Ansprüchen 2 oder 3, dadurch **gekennzeichnet**, daß die genannte Schicht (53) und die genannte Verkleidung (F1) gleicher Natur sind.

5. Verfahren zur Montage eines Abstreifers (41) nach Anspruch 1 auf einer Öffnung (10) der Tür (11) eines Kraftfahrzeuges, dadurch **gekennzeichnet**, daß der Beschlag (4) der Tür (11) vorab auf den Abstreifer (51) aufgeklebt wird und daß dieser nachfolgend am Fahrzeug gleichzeitig mit dem Beschlag (4) angebracht wird.

6. Verfahren nach Anspruch 5, dadurch **gekennzeichnet**, daß der Beschlag (4) der Tür (11) eine Schicht (42) aus genarbtem PVC oder einem anderen, wegen seines ästhetischen Aussehens gewählten Material besteht, das fest mit einer Schicht aus expandiertem Polyurethan (43) verbunden ist, wobei der Abstreifer (51) mindestens auf einen Teil der Oberfläche der Schicht aus expandiertem Polyurethan (43) aufgeklebt wird.

7. Verfahren nach Anspruch 5, dadurch **gekennzeichnet**, daß der benutzte Kleber ein Polyurethan-Kleber ist.

## Claims

1. An inside wipe-seal for the moving glass or window of a motor vehicle door that is provided with an inside lining designed to engage the wipe-seal via a groove provided in the wipe-seal, characterized in that the inside surface of said groove (f'₂) is provided, at least in the portion thereof that is suitable for co-operating with a fastening rib (41) of the lining (4) with a surface layer (54) of polyurethane varnish having good affinity for polyurethane adhesives, the layer being acoustically compatible with the material constituting said rib (41), i.e. not generating any noise at an audible frequency, in particular any squeaking noise under the effect of repeated intermittent contacts at frequencies lying in the range of vibration frequencies due to the vehicle running.

2. An inside wipe-seal for the moving glass or window of a motor vehicle door that is provided with an inside lining designed to engage the wipe-seal via a groove provided in the wipe-seal, characterized in that the inside surface of said groove (f'₂) is provided, at least in the portion thereof that is suitable for co-operating with a fastening rib (41) of the lining (4) with a surface layer (54) of polyolefin type substance (53) having good sliding qualities, the layer being acoustically compatible with the material constituting said rib (41), i.e. not generating any noise at an audible frequency, in particular any squeaking noise under the effect of repeated intermittent contacts at frequencies lying in the range of vibration frequencies due to the vehicle running.

3. A wipe-seal according to claim 1 or 2, characterized in that the sealing lip (L₁) is provided, at least on its portion designed to come into contact with the window (12), with a polyolefin coating (F₁) having good sliding qualities.

4. A wipe-seal according to claims 2 and 3, characterized in that said layer (53) and said coating (F₁) are of the same nature.

5. A method of installing a wipe-seal (41) according to claim 1 in a window bay (10) of a motor vehicle door (11), the method being characterized in that the lining (4) of the door (11) is initially stuck to the wipe-seal (51) and in that the wipe-seal is then installed on the vehicle together with the lining (4).

6. A method according to claim 5, characterized in that the lining (4) of the door (11) includes a layer (42) of grained PVC or of other material chosen for its appearance, and secured to a layer (43) of expanded polyurethane (43), the wipe-seal (51) being stuck to at least a fraction of the surface that is made of expanded polyurethane.

7. A method according to claim 5, characterized in that the adhesive used is a polyurethane type adhesive.
